(19) Europäisches Patentamt
European Patent Office
Office européen des brevets

(11) **EP 3 772 708 A1**

(12) **EUROPEAN PATENT APPLICATION**

(43) Date of publication:
**10.02.2021 Bulletin 2021/06**

(51) Int Cl.:
***G06N 3/04*** *(2006.01)*    ***G06N 3/08*** *(2006.01)*
***G06N 3/10*** *(2006.01)*    ***G06N 5/00*** *(2006.01)*

(21) Application number: **19190943.1**

(22) Date of filing: **09.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **RoboticsX GmbH
81677 Munich (DE)**

(72) Inventors:
• **PERME, Ale
81677 Munich (DE)**
• **PRESEREN, Rok
81677 Munich (DE)**

(74) Representative: **CMS Cameron McKenna Nabarro
Olswang LLP
Cannon Place
78 Cannon Street
London EC4N 6AF (GB)**

(54) **FACTORY DEVICE INTEGRATION**

(57) A method of integrating a device into a factory comprises storing a factory data model describing the factory, the factory data model being a graph of nodes connected by edges. A device data model is stored describing the device, the device data model being a graph of nodes connected by edges. A graph neural network is used to compute, for each node of the factory data model and each node of the device data model, an embedding vector representing a position of the node in a multi-dimensional space. For each node of the device data model, a mapping to a node of the factory data model is computed by finding a node of the factory data model which is closest to the node of the device data model in the multi-dimensional space

EP 3 772 708 A1

**Description**

BACKGROUND

Factories and manufacturing plants are complex systems which are challenging to manage in order to achieve efficiencies. Factory control systems are used which receive data about machines, equipment and applications on the machines in the factory and control configurations and settings of the machines, equipment and applications to achieve objectives such as delivering target production quota and quality, saving resources, minimizing downtime, trouble-shooting faults, triggering safety alerts, and facilitating maintenance. Typically a factory comprises many production lines, each of which is complex and has several machines. The factory control system is set up with knowledge of the production lines and individual machines and their applications, mostly by manual configuration. The factory control system uses its configuration and knowledge to enable it to communicate with, and understand data from the various production lines, machines and applications.

As market conditions change, or for other reasons, there is often a need to change one or more of the production lines, by adding one or more new machines of a new type, or model, or modifying the applications on these machines. It also happens that there is a need to replace one or more of the existing machines with new machines of a new model or type. In these situations, manual integration work has to be done to enable the factory control system to understand the new machines or new models and integrate that understanding into its knowledge of the existing factory. Only when the manual work has been done, to give the factory control system knowledge about the new machines and how to understand them, is it possible for the factory to become fully operational.

The embodiments described below are not limited to implementations which solve any or all of the disadvantages of known factory device integration systems.

SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

According to an aspect of the invention there is a factory control system comprising:

> a memory storing a factory data model describing a factory, the factory data model being a graph of nodes connected by edges;
> the memory storing a device data model describing a device to be integrated into the factory, the device data model being a graph of nodes connected by edges;
> a processor configured to compute, using a graph neural network, for each node of the factory data model and each node of the device data model, an embedding vector representing a position of the node in a multi-dimensional space;
> the processor configured, for each node of the device data model, to compute a mapping to a node of the factory data model by finding a node of the factory data model which is closest to the node of the device data model in the multi-dimensional space;
> the processor configured to use the mappings to integrate the device into the factory control system. In this way it is possible to automatically compute a mapping to enable a new device, or a new or changed data model of device, to be integrated into a factory control system. It is now possible to change the factory configuration quickly and efficiently and factory down time is reduced.

In a preferred example the processor is configured to use the mappings to enable semantically interoperable communication between the device and one or more other devices in the factory.

In another aspect of the invention there is a computer-implemented method comprising:

> storing a factory data model describing a factory, the factory data model being a graph of nodes connected by edges;
> storing a device data model describing a device to be integrated into the factory, the device data model being a graph of nodes connected by edges;
> computing, using a graph neural network, for each node of the factory data model and each node of the device data model, an embedding vector representing a position of the node in a multi-dimensional space;
> for each node of the device data model, computing a mapping to a node of the factory data model by finding a node of the factory data model which is closest to the node of the device data model in the multi-dimensional space;
> storing the mappings;
> using the mappings to enable semantically interoperable communication between the device and one or more other devices in the factory.

The method gives a fast and automated way of enabling semantically interoperable communication between the device and one or more other devices in the factory. Semantically interoperable communication means the ability for the device not only to correctly receive the messages from other devices in the factory and to send messages to other devices in the factory which will be understood by those other devices, but also to correctly interpret the received information within the context of device operation. By using a graph neural network topology of the data models is taken into account and facilitates computing the mapping.

In an example the method comprises using the mappings to communicate with the device using communications protocols which are from the Internet protocol suite or an industrial automation protocol suite. The Internet protocol suite is well known and comprises at least transmission internet protocol (IP).

In an example the method comprises converting natural language values in a feature vector at each node into numerical values. In this way the mapping is computed using only numerical data and is not influenced predominantly either by natural language or computer language semantic labels such as node and parameter names, so that naming conflicts and semantic label conflicts are avoided.

In an example the device data model is considered to be a sub graph of the factory data model. This gives the benefit that the device data model can be mapped to the factory data model entirely and with full confidence and it means that the graph neural network can be trained in advance using the factory data model.

In a preferred example the graph neural network comprises a plurality of weights such that there is one weight for each node of the neural network, and at least one weight per edge of the neural network. By using weights for individual edges improved results are found since topology of edges is taken into account when computing the embedding vectors.

In a preferred example there are two weights per edge of the neural network, one weight for a first direction of the edge and another weight for a name of the edge. In the preferred example all model parameters have been included in the weight matrices for the computing purposes. By taking into account bidirectional nature of edges and treating the two directions of an edge separately, improved results are found. In a particular example described in more detail below the weight matrices are not independent as the method constrained the possible edge weights to reflect 19 basic reference types in the applied device communication protocol.

In an example the graph neural network has been trained using unsupervised training and with the factory data model as the training data set. Using the factory data model as training data set is beneficial since the factory data model is typically readily available in digital form and is accurate.

In an example, computing the embedding vector comprises computing a forward propagation through the graph neural network, the forward propagation comprising computing an aggregation comprising a mean pooling operation on embedding vectors. It has been found that using a mean pooling operation on the embedding vectors is beneficial because it enables the graph neural network to distinguish between more topologies of the data models, as compared with alternative aggregation operators such as max pooling. As a result mean pooling gives improved performance and accuracy of the resulting mapping.

In an example, computing the aggregation comprises computing the embedding vector of a node i in layer k of the graph neural network by computing the mean of the outputs of neural network nodes in the neighborhood of node i, when each neural network node in the neighborhood takes as input a graph node embedding vector of a corresponding neural network node in a previous layer of the neural network, where the number of nodes in the neighborhood is fixed. By using a fixed number of nodes in the neighborhood a scalable, efficient computing mechanism is obtained.

In an example the forward propagation comprises computing an update operation to update an embedding vector by using a linear combination of the results of the aggregation and a previous value of the embedding vector. Using a linear combination is fast and efficient to compute and is found to give good results in practice.

In an example the method comprises, prior to computing the embedding vectors, training the graph neural network using the factory data model. The graph neural network is then ready to use to compute the mapping.

In an example, the training comprises using a loss function where the loss at node i of the neural network is equal to the sum over S random walks from node i, of the logarithm of the product of the embedding vector, run through a sigmoid function, for node i and the embedding vector for node j, where nodes i and j are a pair found by one of the random walks from node i. Before applying the logarithm, the product of the embedding vectors is run through a sigmoidal function to ensure non-negativity. This loss function is found to be effective and it enables unsupervised training to be done so that labelled training data is not needed.

According to an aspect of the present technology there is a method of training a graph neural network for use in the factory control system, the method comprising:

initializing an embedding vector of each node of the graph neural network with a feature vector of a corresponding node of the factory data model;

initializing weights of the graph neural network, such that there are individual weights for individual nodes of the neural network, and at least two weights per edge of the neural network;

computing a forward propagation through the graph neural network by applying an aggregation function and a combine function to each node of the graph neural network; and

updating the weight matrices according to optimization of a loss function. The training uses a factory data model and so once trained, the graph neural network can be used to compute embedding vectors of nodes of previously unseen device data models. By using the weight matrices which include two weights per edge of the neural network, it is possible to take into account detailed topologies when computing the embedding vectors which gives good performance.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is a schematic diagram of a factory, factory control system, and a device to be added to the factory;
FIG. 1A is a schematic diagram of a plurality of machines in a factory, where the machines are in communication with a factory data model;
FIG. 2 is a flow diagram of a method of operation at an interface of a factory control system;
FIG. 3A is a schematic diagram of a method of training a graph neural network and computing factory graph node embeddings;
FIG. 3B is a flow diagram of a method of using a trained graph neural network to compute a mapping for use in the method of FIG. 2;
FIG. 4 is a flow diagram of a method of forward propagation in a graph neural network of the present disclosure;
FIG. 5 is a flow diagram of a method of training a graph neural network of the present disclosure;
FIG. 6A shows two topologies of part of a device data model;
FIG. 6B shows two more topologies of part of a device data model;
FIG. 7 is a graph of a loss function for training a graph neural network;
FIG. 8 illustrates an exemplary computing-based device in which embodiments of a control system of a factory are implemented.

Like reference numerals are used to designate like parts in the accompanying drawings.

DETAILED DESCRIPTION

The detailed description provided below in connection with the appended drawings is intended as a description of the present examples and is not intended to represent the only forms in which the present example are constructed or utilized. The description sets forth the functions of the example and the sequence of operations for constructing and operating the example. However, the same or equivalent functions and sequences may be accomplished by different examples.

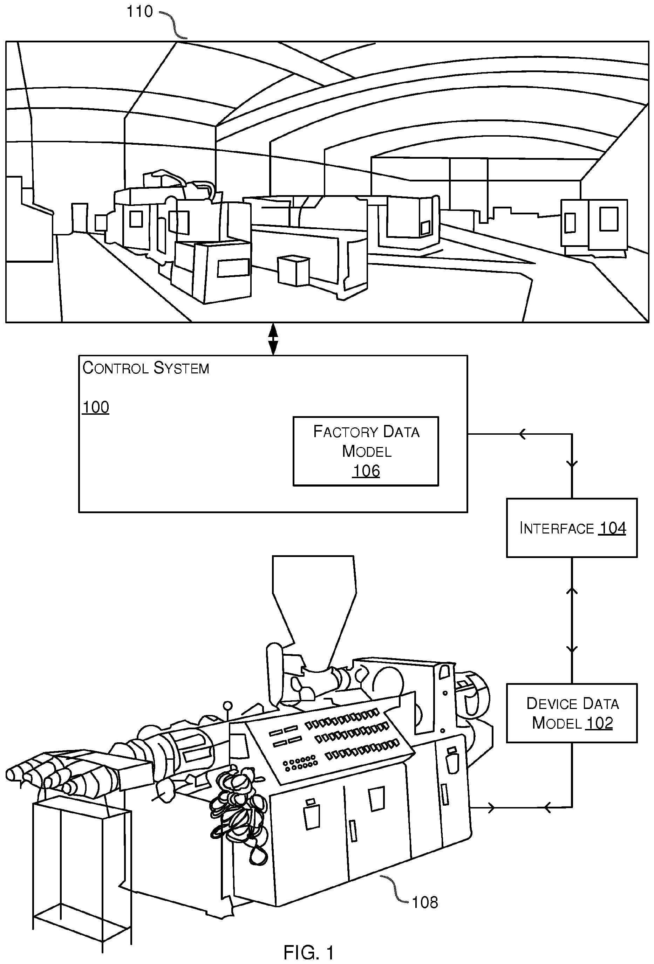

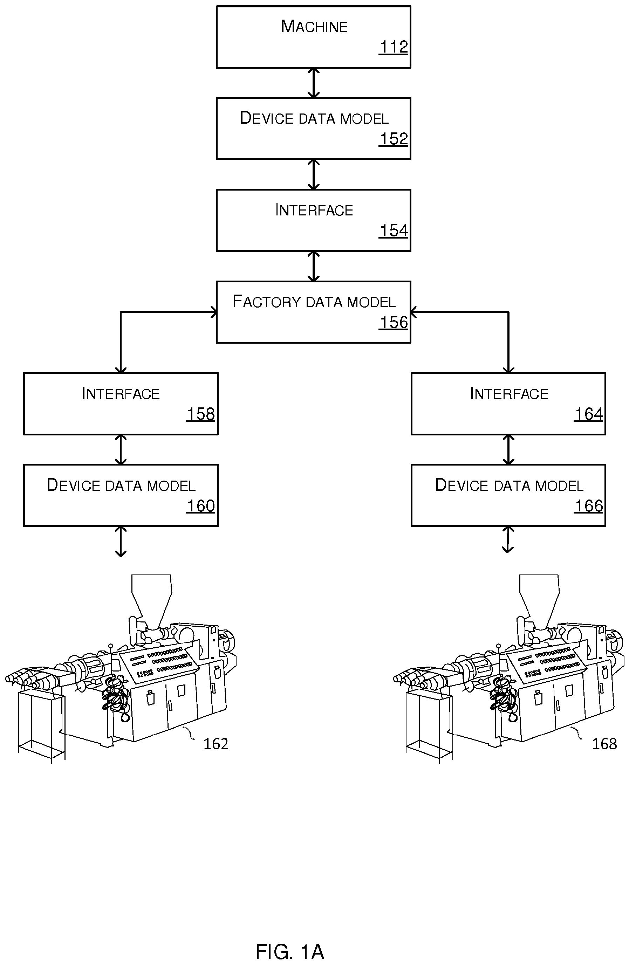

FIG. 1 is a schematic diagram of a factory 110 with a plurality of production lines, each production line having one or more machines. The factory is controlled by at least one control system 100 which is computer implemented.

The control system receives data from the production lines and the machines, their tools and peripheral units, such as sensor data, productivity data, quality data, tooling data and other data. A non-exhaustive list of examples of types of sensor data is: temperature, weight, volume, images, light sensor data, vibration sensor data, pressure sensor data, rate of output of processed material, resource consumption rates. A non-exhaustive list of examples of the tooling data is: welding wire speed, welding gas flow, gripper orientation, gripper hold status. The quality data includes information about quality of goods produced by the production lines and any faults or flaws which are observed in the goods. In a preferred example the control system 100 uses open platform communications unified architecture (OPC UA) technology as a communication protocol but this is an example only as other communication protocols for industrial automation or Internet protocols are used in some examples. In general, industrial automation protocols guarantee a maximum latency according to safety regulations.

The control system records and processes the data from the production lines and the machines. It triggers alerts if faults or anomalies are detected or predicted in a production line or a machine. It generates reports for use by human operators and other business systems. It is also able to automatically control one or more of the machines or production lines in the light of the processed data by sending control signals to one or more of the machines.

In order for the control system 100 to control the factory 110 effectively it uses a factory data model 106 which is a digital data representation of the production lines, machines and other entities of the factory 110. FIG. 1 shows the factory data model 106 inside the control system 100. However, it is not essential for the factory data model 106 to be inside the control system 100 as long as it is in communication with the control system 100 using any suitable wired or wireless communications link.

A data model comprises nodes connected by edges to form a graph which represents a factory (in the case of a factory data model) or a device (in the case of a device data model). Each node represents an entity such as a production line, a machine, machine component, a sensor, including parameters used to describe these entities. The edges link the nodes according to relationships between the entities. In an example, a node representing a production line is connected to a plurality of child nodes, each child node representing a machine in the production line. Each child node has one or more grandchild nodes representing components of the respective machine or sensors in the respective machine. Each node in a data model has a feature vector describing attributes of the entity the node represents. The feature vectors may be manually defined and configured by an operator. The definition of these vectors sometimes complies with (communication) standards, but is more often proprietary as to reflect particularities of considered factory setup and particularities of device applications. In an example, a feature vector has information about type and format of data associated with the entity. The feature vectors are of a fixed, pre-defined size which is the same for all the nodes of a data model. In practice, the values in the feature vectors typically contain natural language, such as names of components, names of factory production lines, names of sensors. However, the present technology is not based on natural language analysis since any description data in the feature vectors is hashed to convert it to numerical values and bring it on par with numerical elements of feature vectors. This also causes the graph topology of the nodes to take precedence over terminology matching. In this way the topology of the graph nodes rather than the text data values of the feature vectors is brought to prominence in the solution. In a preferred example there are three values in each feature vector as follows: the unique browse name of an object, the display name of an object and a data type of an object (the data type is of a finite set of standardized values and is encoded numerically). Thus in the preferred example the feature vectors are three dimensional.

When it is needed to integrate a new machine (such as plastics extruder machine 108) into an existing factory 110, a data model 102 of the new machine has to be integrated into the factory data model 106, in order for the control system 100 to operate effectively. Previously it has been a manual task to integrate the data model 102 of the new machine into the factory data model 106. The manual task is complex and time consuming and so is not done as frequently as needed to improve production efficiency and increase valuable production time. Suppose a node P of the new machine data model can in fact be mapped to node Q of the factory data model. Initially, data values associated with node P are not the same as data values associated with node Q because the new machine has not yet been integrated into the factory and the latter might not have any data values yet. So it is not possible to simply observe the data values of node P and search for a node in the factory data model with the same values (albeit in a different representation) to deduce the matching. Only when the new machine is integrated into the factory and data starts flowing do the data values of node P become the same as the data values of node Q.

The present disclosure describes how to automatically integrate a data model 102 of a machine into an existing factory data model 106. The problem comprises finding a subgraph of the factory data model which corresponds to the data model of the new machine. Once the integration has been done, in a fast, automated manner, the control system 100 is operational with respect to the new factory arrangement comprising factory 110 with new plastics extruder 108. The integration is achieved by computing a mapping between the data model 102 of the new machine and the factory data model 106. The mapping is used by interface 104 which enables the control system to understand the data model 102 of the new device. The mapping is computed by using a graph neural network in order to take into account similarity of data models' (local) topologies, so that a node of the new device data model is said to be similar to a node of the factory data model if it has similar local topology to the node of the factory data model. The mapping also takes into account similarity of data attributes in some cases, where attributes are expressed in feature vectors of the nodes. In contrast previous approaches have sought to use semantics to label nodes of the data models and have failed to find good solutions for various reasons, including naming conflicts, structural conflicts and data conflicts.

Problems that arise due to semantic structures of the factory data model and new machine data model are mitigated by using a graph neural network. By using a graph neural network the topology likeliness is placed in the forefront and therefore diminishes the importance of particular semantics used to label the model elements.

Problems that arise due to naming conflicts (of node names) between the models are mitigated by using a graph neural network. Using a graph neural network smoothens individual particularities/distinctions of the model, and makes naming conflicts less important.

Problems that arise due to data conflicts (between data of nodes) are addressed because data values are not directly compared and not only data values of the nodes are compared. In the present technology topology likeliness of nodes is used.

Note that although FIG. 1 illustrates plastics extruder machine 108 and particular machines and production lines in factory 110 these are not intended to limit the scope of the disclosure and are given to aid understanding of the technology. Other types of machine and factory are used in some examples. Other types of industrial devices, such as grippers, welding guns, safety cages, cameras, and sensors are used in some examples.

FIG. 1A is an example of a deployment where the factory data model 156 is used, together with interfaces 154, 158, 164 to enable semantically interoperable communication between a plurality of machines or devices 112, 162, 168. Each machine or device is a physical apparatus which has installed on it at least one application . The factory data model 156 is used to enable semantically interoperable communication between at least one application on each of the machines/devices. In this example there is no control system 100 shown since it is not mandatory to enable semantically interoperable direct communication between the machines and/or devices. FIG. 1A shows three machines 112, 162, 168 although the deployment works for any two or more machines. Each machine/device has a device data model 152, 160, 166 and the device data models differ from one another. Each device data model 152, 160, 166 is able to communicate with the factory data model 156 via an interface 154, 158, 164 as illustrated.

Mappings are computed, one mapping between the factory data model 156 and each of the device data models 152, 160, 166. The mappings are computed using a graph neural network as explained herein. Each mapping is stored in an interface 154, 158, 164 between the device data model of the mapping and the factory data model 156. Once the mappings have been computed and stored in the interfaces 154, 158, 164 the devices 162, 168, 112 are able to send and receive semantically interoperable communications with one another.

Suppose first plastics extruder machine 162 wants to check the temperature of the other machines 112, 168 to find out current activity of those other machines. The first plastics extruder machine device data model 160 sends a message via interface 158 to the factory data model 156 to request the temperature state information. The factory data model 156 acts as a translator. It translates the request into a request for temperature state data from machine 112 and sends it, via interface 154, to an application on machine 112. It also translates the request into a request for temperature state data from second plastics extruder machine 168 and sends it to an application on second plastics extruder machine 168 via interface 164. When replies are received at the factory data model 156 from the application on machine 112 and the application on plastics extruder machine 168 the replies are translated using factory data model 156 into a form semantically interpretable by an application on the first plastics extruder machine 162. The translated replies are then sent, via interface 158, to the application on the first plastics extruder machine 162.

Suppose first plastics extruder machine 162 wants to request the second plastics extruder machine 168 to slow its rate of production. The first plastics extruder machine 162 is able to send the request and the request is translated using interface 158, factory data mode 156 and interface 164, so that it is interpretable semantically by the second plastics extruder machine.

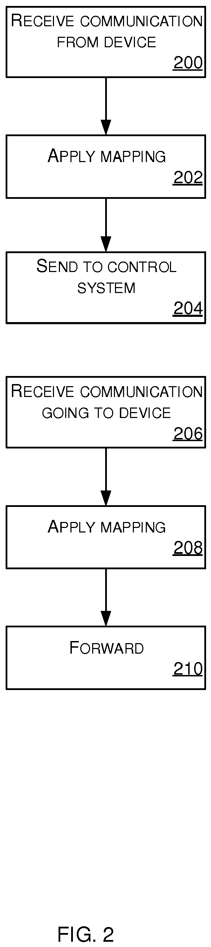

FIG. 2 is a flow diagram of a method of operation at the interface 104 of FIG. 1 in the situation where the factory data model is part of the control system. The interface 104 receives 200 a communication from the new device 108 to be sent to the control system 100. The interface 104 applies 202 the mapping to convert contents of the communication into a form compatible with the factory data model and understandable by the control system 100. The interface 104 then sends 204 the communication to the control system.

Suppose the interface 104 receives 206 a communication from the control system 100 and destined for the new device. It applies 208 the mapping to contents of the communication and forwards 210 the communication to the new device.

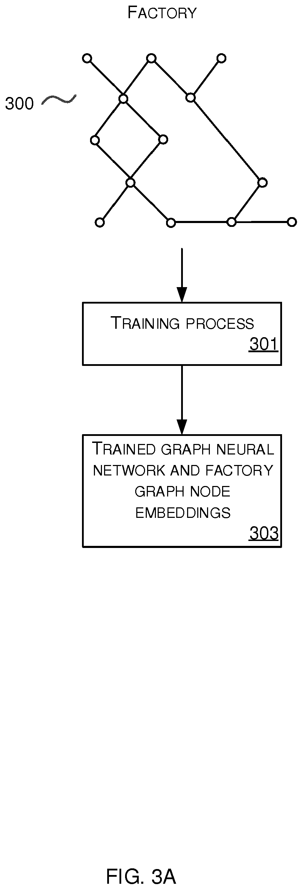

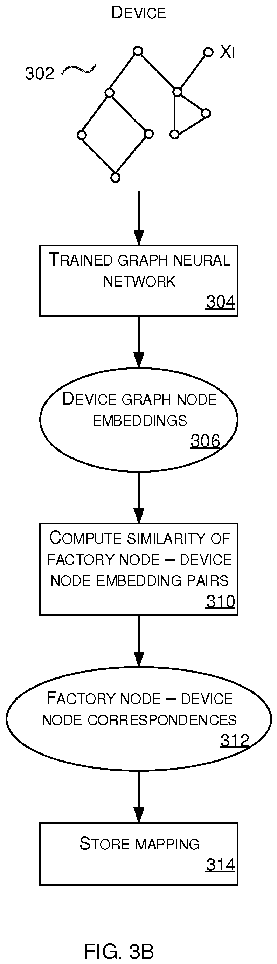

In order to automatically compute the mapping used by interface 104 a graph neural network 304 is used as now explained with reference to FIG. 3A and FIG 3B. A graph neural network is a neural network which is configured to take as input a graph of nodes connected by edges and to compute a prediction which, in the present technology is a node embedding. A graph neural network has a variable number of nodes, unlike a standard neural network where the architecture is fixed. As a result, a graph neural network is able to take inputs of different sizes, such as graphs with different numbers of nodes and edges. A node embedding is a vector specifying a location in a multi-dimensional space. The graph neural network is trained (as described later in this document) to compute the node embeddings so that nodes which are close together in the multi-dimensional space are taken to be similar as defined by metrics.

As indicated in FIG. 3A the graph neural network takes as input a graph which is the factory data model 300. The graph neural network is trained using a training process 301 and using the factory graph 300 as the training data set. The outcome of the training process 301 is a trained graph neural network and factory graph node embeddings 303. More detail about the training process 301 is given later in this document.

With reference to FIG. 3B, the trained graph neural network 304 takes as input a graph which is a device data model 302. The device data model is a data model of a new machine 108 or new model of machine to be added to the factory 110. The trained graph neural network 304 computes, for each node of the device data model 302, a device graph node embedding 306. The node embeddings express information about topology as explained in more detail below.

A computer is used to compute a similarity 310 of different possible pairs of the embeddings. Each pair comprises a factory node embedding and a device node embedding. Any suitable similarity metric is used, such as a Euclidean distance in the multi-dimensional space or a scalar product of the embeddings in a pair. Where a scalar product is computed the result is 1 in the case that the embeddings are exactly the same and so the computer searches for pairs where the scalar product is closest to 1. For each node of the device data model, a pair is found with the best similarity metric and the node of the device data model is said to correspond to the node of the factory data model having an embedding in the pair. In some examples, more complex metrics are used, for example based on Weisfeiler-Lehman test in order to find the mapping of device data model as a subgraph to factory data model. Thus factory node- device node correspondences 312 are computed. The correspondences together form a mapping between the device data model and the factory data model and the mapping is stored 314 for use in interface 104 as described above. The mapping enables syntactic and semantic interoperation between the device and the factory.

By using a graph neural network rather than classical convolutional neural networks it is possible to compute the mapping even where the device data models are of various different sizes. Also, the number of neighbors of a node does not matter since in the graph neural network each edge has its own weight matrix with dimensions related to the dimensions of the embedding vectors. The more there are different edges in the graph, the more there are weight matrices. This is in contrast to classical neural network learning methods where the dimensions of input, output and intermediate layers determine fixed dimensions of weight matrices.

Note that the graph neural network affects the node embedding vectors of a model in same and consistent way for factory graph data model A and device data model B. If different semantics are applied to the same device data model, for example, using German and Chinese expressions for labeling identical model nodes, the graph neural network computes different embedding vector values for identical nodes, but consistently different over the complete models. Consequently, the likeliness measure applied, for example scalar product, of the embedding vectors gives the correct mapping results.

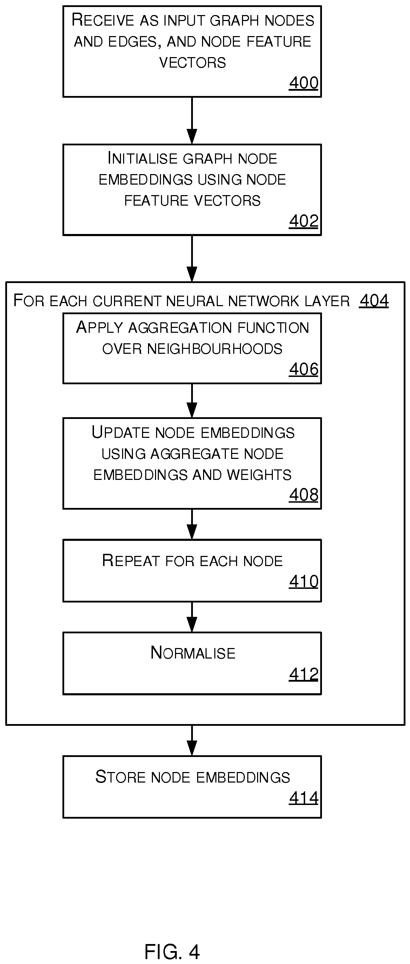

More detail about how the graph neural network is used to compute the node embeddings is now given with reference to FIG. 4. The method of FIG. 4 is a process of forward propagation in a graph neural network of the present disclosure, either during training, or during test time operation when the graph neural network is being used to integrate a new machine into a factory control system. The method of FIG. 4 is performed by any suitable computing functionality at one of the machines or devices in the factory, or at a computing entity in communication with one or more of the machines or devices in the factory..

The graph neural network has a plurality of layers and the number of layers is specified by an operator. In a preferred example, three layers are used. However, in other examples, two or more layers are used.

The graph neural network receives 400 as input graph nodes and edges of a graph as well as a node feature vector for each of the graph nodes. For each of the graph nodes received as input, the forward propagation process initializes 402 a corresponding graph node embedding. To initialize a graph node embedding the graph node embedding vector is set to the values of the feature vector of the received graph node.

For 404 each neural network layer of the graph neural network the forward propagation process comprises applying an aggregation function 406 over neighborhoods of the graph using an aggregation function which is described in more detail below. The node embeddings are then updated (also referred to as combined) using results from the aggregation function and weights. There is one weight for each node of the neural network and also two for each edge with one weight for each directed pair of nodes of the neural network. A directed pair is a pair of nodes of the neural network and a direction from one of the nodes of the pair to another of the nodes of the pair. So each neural network pair has two weights, one for a first direction and one for the opposite direction. Using directed weights is found to give good results since it reflects the relations used to construct data models. Using individual weights for individual edges is found to give good results since it enables edge characteristics to be taken into account as compared with using one single weight matrix for all nodes. The weights have been learnt during a training phase, or in the case that the forward propagation is being done as part of training, the weights are initially randomly initialized and later updated as part of a back propagation process. The aggregation 406 and update 408 operations are repeated 410 for each node of the graph. The resulting node embeddings are then normalized such that they comprise values between zero and 1. Once each neural network layer of the graph neural network has been processed using operations 406, 408, 410, 412 the node embeddings are stored 414.

In an example the aggregation comprises a mean pooling operation given by:

$$\mathbf{h}_{N(i)}^{k} = \text{MEAN}\left(\left\{\text{ReLU}\left(W_{ij}^{k} \bullet \mathbf{h}_{k-1j}; \text{ for } j - s \text{ in the N of i}\right)\right\}\right)$$

Which is expressed in words as, the graph node embedding vector of node i, with neighborhood N, in layer k of the graph neural network, is equal to the mean of the outputs of all the weighted rectified linear units in the neighborhood of node i, when each rectified linear unit in the neighborhood takes as input the graph node embedding vector of the corresponding node in the previous layer, where the number of nodes in the neighborhood taken into the calculation is at most S which is a fixed for each layer in advance. As the number of neighboring nodes in the device data model is not known in advance and not fixed, the use of a fixed value of S for the number of nodes in a neighborhood, gives an efficient working solution for every possible graph since it limits the neighborhood size. In an example there are three layers and S is five for the first layer, five for the second layer and four for the third layer, where these values of S are found to give particularly good empirical results. However, other values of S are used in other examples. If there are more than S neighbors for a given node i then up to S neighbors are selected at random from the possible neighbors of i.

The mean pooling operation is found to give better results than a max pooling operation. When observing specific feature vectors, it was found that MAX pooling fails to distinguish certain graph topologies that are important for the present technology, as also the MEAN does. But for the present technology, there are many more cases where MAX pooling fails. Example topologies where MAX pooling fails to distinguish graph differences are described later. Therefore using MEAN pooling as part of the aggregation function is particularly beneficial as it improved accuracy of the automatically computed mapping.

Regarding the update operation (also referred to as COMBINE), a preferred method is to compute a linear combination of the form:

$$h_i^k = h_i^{k-1} + h_{N(i)}^k$$

Which is expressed in words as, the embedding vector of node i in layer k of the neural network is equal to the embedding vector of node i in the previous layer of the neural network plus the output of the aggregation function for node i in layer k. In some examples the embedding vector $\cdot$ $h_i^k$ is passed through a sigmoid function to normalize it.

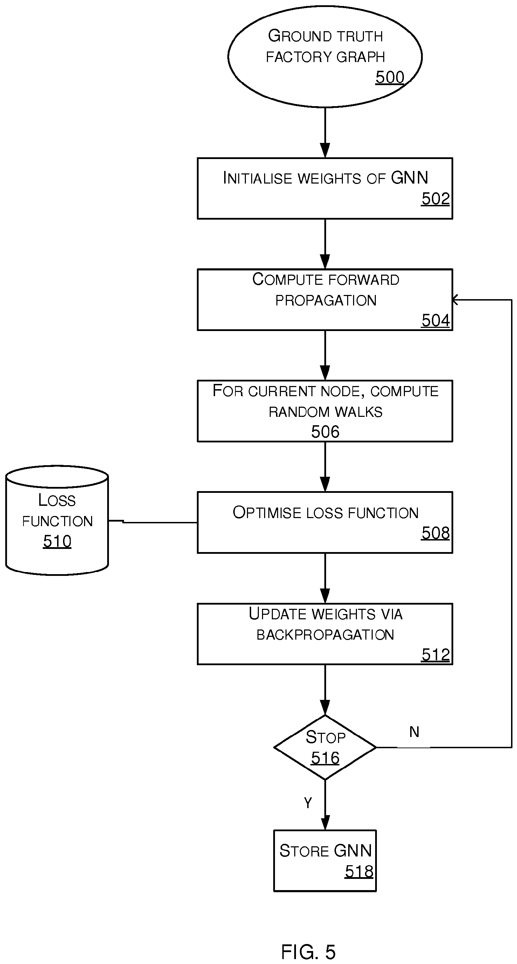

FIG. 5 is a flow diagram of a method of training a graph neural network for use in the method of FIGs. 3 and 4. The training data comprises a ground truth factory graph 500 which is available in memory. The factory graph 500 is a ground truth factory graph in that it is assumed to be correct and because each of its nodes has a feature vector according to a fixed, pre-defined format, and where the values of the feature vectors are known in advance by being manually set by an operator and/or observed empirically.

A graph neural network is instantiated in memory. The graph neural network has a plurality of layers and in a preferred embodiment there are three layers. Each layer has one node for each node of the ground truth factory graph but is not a fully connected layer.

The training process begins by initializing 502 the weights of the graph neural network. The weights are initialized at random. In an example there are 38 different weight matrices each of dimension 3 x 3 giving a total of 342 model parameters. There are 38 different weight matrices because the model is using 19 base reference types of OPC UA and the direction of aggregation matters. Each weight matrix is of dimension 3 x 3 because there are three dimensions in each feature vector and there are three layers in the neural network.

A forward propagation 504 is computed through the graph neural network as described with reference to FIG. 4 above.

One of the nodes of one of the layers is selected as a current node, and a plurality of random walks are computed 506 from that node to obtain a plurality of pairs of nodes, each pair comprising the current node and a node at the end of one of the random walks.

A loss function is then optimized 508 using an unsupervised training loss function 510 and the weights are updated via back propagation 512. Any suitable optimization such as stochastic gradient descent is used. A check is made at check 516 whether to stop training. If there has been little or no change in the weights, or if a specified number of training iterations has been completed, the decision is made to stop training and the graph neural network is stored 518. Otherwise the process repeats from operation 504.

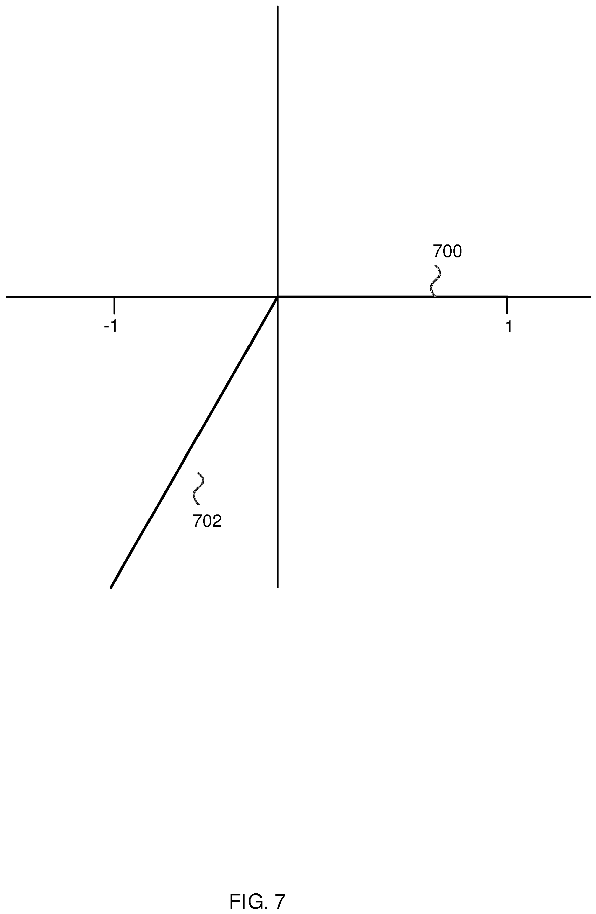

In a preferred example the loss function is a segment wise linear function as illustrated in FIG. 7, comprising segments 700, 702. The loss function has the effect that optimization occurs only when the nodes in a pair are close (such as within four nodes of each other) and their embedding vectors are distinctively different according an applied measure, so that optimization tends to propagate information from the neighborhood into the node. The aim of the loss function is to make nearby graph nodes have similar embeddings and far-away nodes to have distinctive representations as a consequence of factory data models which tend to exhibit that characteristic. On the other hand, the loss function also seeks to make far-away nodes have similar embeddings to the current node, when they truly are similar to the current node.

In a preferred example the loss function is given as:

$$Q(i) = \Sigma S \ln(\sigma(h_i^K \cdot h_j^K; \text{part of } S))$$

Which is expressed in words as the loss at node i is equal to the sum over S random walks from node i, of the logarithm of the sigmoid function value σ of the scalar product of the embedding vector for node i in layer K and the embedding vector for node j in layer K where nodes i and j are in a pair found by the random walk from node i. In an example the number of random walks S is 10 and this is found to give good results. However, other numbers of random walks are used in some examples.

The result of the process of FIG. 5 is a trained graph neural network which has been trained using a large factory data graph. The trained graph neural network is then able to be used to compute embeddings of nodes of previously unseen device data models, where the device data models are smaller than the factory data graph and are known to be sub-graphs of the factory data graph. Because the feature vectors of the factory data graph nodes and the device data models are the same size and also have the same structure, it is possible to use the trained graph neural network from the process of FIG. 5 to compute embeddings of nodes of the device data models. The feature vectors of two or more nodes of the graph neural network may be identical in some cases. Thus the feature vectors form a multi set, which is a set with two or more identical elements. In various embodiments the aggregate and combine functions used in the forward propagation are selected so as to be able to distinguish between different multisets.

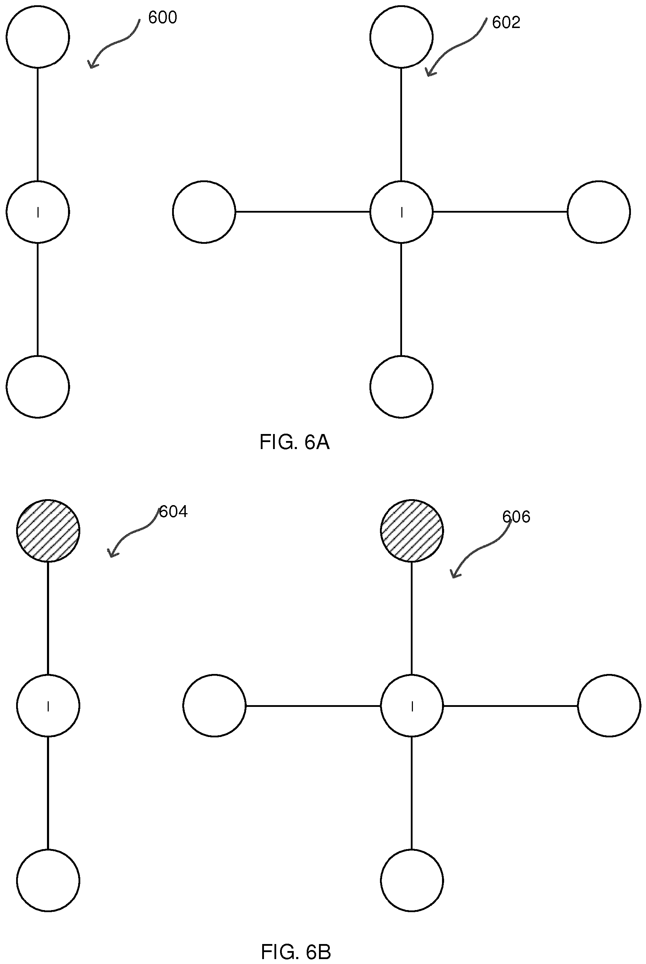

FIG. 6A shows a first graph topology 600 comprising a central node i having two adjoining nodes. It also shows a second graph topology 602 having a central node i having four adjoining nodes. The feature vectors for all the nodes in FIG. 6A are the same. Where MAX pooling is used as part of the aggregation function the aggregation function fails to distinguish between the first graph topology 600 and the second graph topology 602. The same is true for MEAN pooling. Therefore there are topologies, which cannot be distinguished neither by MAX nor by MEAN pooling.

FIG. 6B shows a first graph topology 604 comprising a central node i having two adjoining nodes with different feature vectors. It also shows a second graph topology 606 having a central node i having four adjoining nodes with three feature vectors that are the same and one feature vector which is different. Where MAX pooling is used as part of the aggregation function the aggregation function fails to distinguish between the first graph topology 604 and the second graph topology 606 however, MEAN pooling is able to tell the difference.

Empirical results have been obtained for a graph neural network trained using one ground truth factory model having just over 34,000 nodes and an average neighbor number of 3.4. The graph neural network had 342 free parameters. The trained graph neural network was applied to two device data models with 92 and 148 nodes respectively. The percentage of nodes which were correctly mapped, as compared with a manual mapping, was 39% for the device data model having 92 nodes and 47% for the device data model having 148 nodes. Note that this empirical data is given to illustrate the working nature of the technology and is not intended to limit the scope of protection to the particular numbers of nodes and neighbors used.

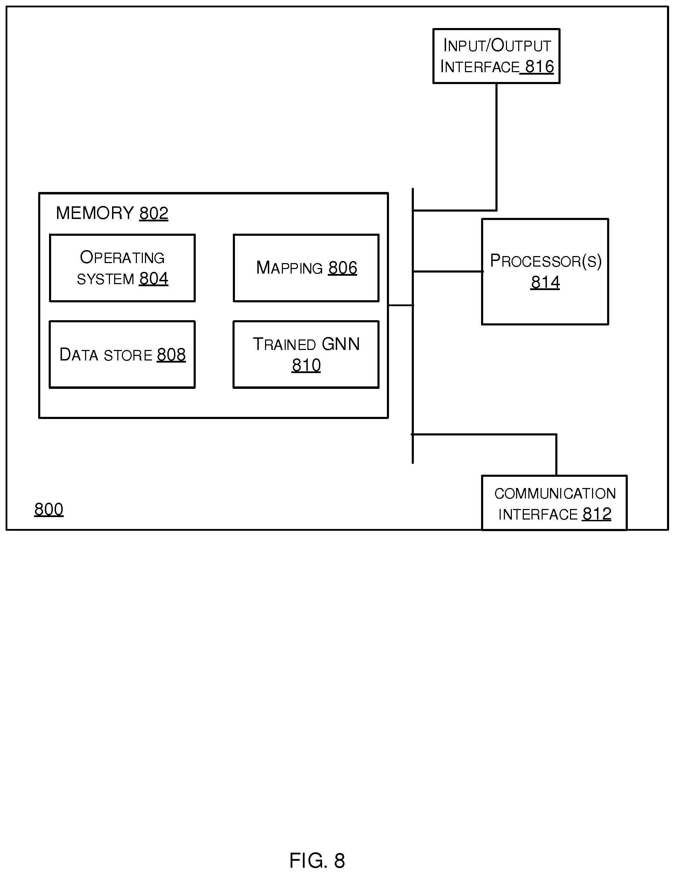

FIG. 8 illustrates various components of an exemplary computing-based device 800 which are implemented as any form of a computing and/or electronic device, and in which embodiments of a control system for controlling a factory are implemented in some examples.

Computing-based device 800 comprises one or more processors 814 which are microprocessors, controllers or any other suitable type of processors for processing computer executable instructions to control the operation of the device in order to use a graph neural network to compute a mapping between a device data model of a device to be added to the factory, and a factory data model of the factory. In some examples, for example where a system on a chip architecture is used, the processors 814 include one or more fixed function blocks (also referred to as accelerators) which implement a part of the method of any of FIGs. 2 to 5 in hardware (rather than software or firmware). Platform software comprising an operating system 804 or any other suitable platform software is provided at the computing-based device to enable application software to be executed on the device. A trained graph neural network 810 is stored at the computing based device as well as one or more mappings 806 between device data models and a factory data model. A data store 808 holds a loss function, a factory data model, one or more device data models, weight matrices and other data.

The computer executable instructions are provided using any computer-readable media that is accessible by computing based device 800. Computer-readable media includes, for example, computer storage media such as memory 802 and communications media. Computer storage media, such as memory 802, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 802) is shown within the computing-based device 800 it will be appreciated that the storage is, in some examples, distributed or located remotely and accessed via a network or other communication link (e.g. using communication interface 812).

The computing-based device 800 also comprises an input/output interface 816 arranged to output display information to a display device which may be separate from or integral to the computing-based device. The display information may provide a graphical user interface. The input/output controller 816 is also arranged to receive and process input from one or more devices, such as a user input device (e.g. a mouse, keyboard, camera, microphone or other sensor). In some examples the user input device detects voice input, user gestures or other user actions and provides a natural user interface (NUI). This user input may be used to view mappings, input device data models, set parameter values and for other purposes. In an embodiment the display device also acts as the user input device if it is a touch sensitive display device. The input/output interface 816 outputs data to devices other than the display device in some examples, e.g. a locally connected printing device.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

This acknowledges that software is a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

The term 'subset' is used herein to refer to a proper subset such that a subset of a set does not comprise all the elements of the set (i.e. at least one of the elements of the set is missing from the subset).

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

**Claims**

1. A factory control system (100) comprising:

   a memory storing a factory data model (106) describing a factory (110), the factory data model (106) being a graph of nodes connected by edges;
   the memory storing a device data model (102) describing a device (108) to be integrated into the factory (110), the device data model being a graph of nodes connected by edges;
   a processor configured to compute, using a graph neural network, for each node of the factory data model (106) and each node of the device data model (102), an embedding vector representing a position of the node in a multi-dimensional space;
   the processor configured, for each node of the device data model (102), to compute a mapping to a node of the factory data model (106) by finding a node of the factory data model (106) which is closest to the node of the device data model (102) in the multi-dimensional space;
   the processor configured to use the mappings to integrate the device (108) into the factory control system (100).

2. The factory control system of claim 1 wherein the processor is configured to use the mappings to enable semantically interoperable communication between the device (108) and one or more other devices in the factory (110).

3. A computer-implemented method comprising:

   storing a factory data model (106) describing a factory (110), the factory data model (106) being a graph of nodes connected by edges;
   storing a device data model (102) describing a device (108) to be integrated into the factory (110), the device data model (102) being a graph of nodes connected by edges;
   computing, using a graph neural network, for each node of the factory data model (106) and each node of the device data model (102), an embedding vector representing a position of the node in a multi-dimensional space;
   for each node of the device data model (102), computing a mapping to a node of the factory data model (106) by finding a node of the factory data model (106) which is closest to the node of the device data model (102) in the multi-dimensional space;
   storing the mappings; and
   using the mappings to enable semantically interoperable communication between the device and one or more other devices in the factory (110).

4. The method of claim 3 comprising using the mappings to communicate with the device using a communications protocol which is from the Internet protocol suite, or is an industrial automation protocol..

5. The method of claim 4 comprising converting natural language values in a feature vector at each node into numerical values.

6. The method of any of claims 3 to 5 wherein the device data model is considered to be a sub graph of the factory data model.

7. The method of any of claims 3 to 6 wherein the graph neural network comprises a plurality of weights such that there is at least one weight for each node of the neural network, and at least one weight per edge of the neural network.

8. The method of claim 7 wherein there are at least two weights per edge of the neural network, one weight for a direction of the edge and another weight for a name of the edge.

9. The method of any of claims 3 to 8 wherein the graph neural network has been trained using unsupervised training and with the factory data model as the training data set.

10. The method of any of claims 3 to 9 wherein computing the embedding vector comprises computing a forward propagation through the graph neural network, the forward propagation comprising computing an aggregation comprising a mean pooling operation on embedding vectors.

11. The method of claim 10 wherein computing the aggregation comprises computing the embedding vector of a node i in layer k of the graph neural network by computing the mean of the outputs of neural network nodes in the neighborhood of node i, when each neural network node in the neighborhood takes as input a graph node embedding vector of a corresponding neural network node in a previous layer of the neural network, where the number of nodes in the neighborhood is fixed.

12. The method of claim 10 or claim 11 wherein computing the forward propagation comprises computing an update operation to update an embedding vector by using a linear combination of the results of the aggregation and a previous value of the embedding vector.

13. The method of any of claims 3 to 12 comprising, prior to computing the embedding vectors, training the graph neural network using the factory data model.

14. The method of claim 13 comprising using a loss function where the loss at node i of the neural network is equal to the sum over S random walks from node i, of the logarithm of the product of the embedding vector for node i and the embedding vector for node j, run through a sigmoid function, where nodes i and j are a pair found by one of the random walks from node i.

15. A method of training a graph neural network for use in the factory control system (100) of claim 1, the method comprising:

    initializing an embedding vector of each node of the graph neural network with a feature vector of a corresponding node of the factory data model (106);
    initializing weights of the graph neural network, such that there are individual weights for individual nodes of the neural network, and at least two weights per edge of the neural network;
    computing a forward propagation through the graph neural network by applying an aggregation function and a combine function to each node of the graph neural network; and
    updating the weight matrices according to optimization of a loss function.

110

CONTROL SYSTEM

100

FACTORY DATA
MODEL
106

INTERFACE 104

DEVICE DATA
MODEL 102

108

FIG. 1

FIG. 1A

```
┌─────────────────────────┐
│ RECEIVE COMMUNICATION   │
│      FROM DEVICE        │
│                    200  │
└─────────────────────────┘
             │
             ▼
┌─────────────────────────┐
│     APPLY MAPPING       │
│                    202  │
└─────────────────────────┘
             │
             ▼
┌─────────────────────────┐
│   SEND TO CONTROL       │
│      SYSTEM             │
│                    204  │
└─────────────────────────┘


┌─────────────────────────┐
│ RECEIVE COMMUNICATION   │
│    GOING TO DEVICE      │
│                    206  │
└─────────────────────────┘
             │
             ▼
┌─────────────────────────┐
│     APPLY MAPPING       │
│                    208  │
└─────────────────────────┘
             │
             ▼
┌─────────────────────────┐
│       FORWARD           │
│                    210  │
└─────────────────────────┘
```

FIG. 2

FACTORY

300 ~

TRAINING PROCESS

301

TRAINED GRAPH NEURAL
NETWORK AND FACTORY
GRAPH NODE
EMBEDDINGS

303

FIG. 3A

DEVICE

302

Xi

```
TRAINED GRAPH NEURAL
      NETWORK
        304
```

```
DEVICE GRAPH NODE
    EMBEDDINGS
       306
```

```
COMPUTE SIMILARITY OF
FACTORY NODE — DEVICE
NODE EMBEDDING PAIRS
        310
```

```
FACTORY NODE — DEVICE
NODE CORRESPONDENCES
         312
```

```
  STORE MAPPING
       314
```

FIG. 3B

RECEIVE AS INPUT GRAPH NODES AND EDGES, AND NODE FEATURE VECTORS 400

INITIALISE GRAPH NODE EMBEDDINGS USING NODE FEATURE VECTORS 402

FOR EACH CURRENT NEURAL NETWORK LAYER 404

APPLY AGGREGATION FUNCTION OVER NEIGHBOURHOODS 406

UPDATE NODE EMBEDDINGS USING AGGREGATE NODE EMBEDDINGS AND WEIGHTS 408

REPEAT FOR EACH NODE 410

NORMALISE 412

STORE NODE EMBEDDINGS 414

FIG. 4

GROUND TRUTH
FACTORY GRAPH
500

INITIALISE WEIGHTS OF GNN
502

COMPUTE FORWARD
PROPAGATION
504

FOR CURRENT NODE, COMPUTE
RANDOM WALKS
506

LOSS
FUNCTION
510

OPTIMISE LOSS FUNCTION
508

UPDATE WEIGHTS VIA
BACKPROPAGATION
512

STOP
516

N

Y

STORE GNN
518

FIG. 5

600

602

FIG. 6A

604

606

FIG. 6B

700

-1

1

702

FIG. 7

INPUT/OUTPUT
INTERFACE 816

MEMORY 802

OPERATING
SYSTEM 804

MAPPING 806

DATA STORE 808

TRAINED GNN
810

PROCESSOR(S)
814

COMMUNICATION
INTERFACE 812

800

FIG. 8

**EUROPEAN SEARCH REPORT**

Application Number

EP 19 19 0943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/055526 A1 (GOOGLE LLC [US]) 21 March 2019 (2019-03-21) * figures 1-3 * * paragraphs [0006] - [0009], [0015] - [0070] * | 1-15 | INV. G06N3/04 G06N3/08 G06N3/10 G06N5/00 |
| A | WO 2019/081781 A1 (DEEPMIND TECH LIMITED [GB]) 2 May 2019 (2019-05-02) * figures 1-6 * * page 1, line 25 - page 12, line 20 * | 1-15 | |
| A | IRAJ MAHDAVI ET AL: "Graph-neural network approach in cellular manufacturing on the basis of a binary system", INTERNATIONAL JOURNAL OF PRODUCTION RESEARCH., vol. 39, no. 13, 31 January 2001 (2001-01-31), pages 2913-2922, XP055663272, GB ISSN: 0020-7543, DOI: 10.1080/00207540110059114 * abstract; tables 1-9 * * page 2914, paragraph 4 - page 2920, paragraph 5 * | 1-15 | TECHNICAL FIELDS SEARCHED (IPC) G06N |
| A | Anonymous: "Graph Neural Networks", Representation Learning on Networks,, 24 April 2018 (2018-04-24), XP055663738, Retrieved from the Internet: URL:http://snap.stanford.edu/proj/embeddings-www/files/nrltutorial-part2-gnns.pdf [retrieved on 2020-01-30] * page 11 - page 27 * | 1-15 | |

The present search report has been drawn up for all claims

| Place of search | Date of completion of the search | Examiner |
|---|---|---|
| The Hague | 5 February 2020 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 0943

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2020

| Patent document cited in search report | Publication date | Patent family member(s) | Publication date |
|---|---|---|---|
| WO 2019055526 A1 | 21-03-2019 | NONE | |
| WO 2019081781 A1 | 02-05-2019 | NONE | |

EPO FORM P0459

For more details about this annex : see Official Journal of the European Patent Office, No. 12/82